# EUROPÄISCHE PATENTANMELDUNG

(11) **EP 3 686 002 A1**
(43) Veröffentlichungstag der Anmeldung: **29.07.2020**
(21) Anmeldenummer: 20153439.3
(22) Anmeldetag: 23.01.2020
(51) Int. Cl.: B32B 5/24, B32B 5/02, B32B 5/18, B32B 7/027, B32B 7/05, B32B 7/14, B32B 15/04, B32B 15/20, B60R 13/08, G10K 11/168

(54) **VERBUNDWERKSTOFF ZUR REALISIERUNG EINER THERMISCHEN UND/ODER AKUSTISCHEN ISOLIERUNG**

(30) Priorität: 25.01.2019 DE 202019100429 U
(71) Anmelder: Cellofoam GmbH & Co. KG, 88400 Biberach (DE)
(72) Erfinder: Maier, Frank, 89077 Ulm (DE)
(74) Vertreter: Rings, Rolf

(57) **Zusammenfassung**

Verbundwerkstoff (10) zur Realisierung einer thermischen und/oder akustischen Isolierung in Fahrzeugen, Bauten oder Anlagen mit einer insgesamt flächigen plattenartigen Grundform umfassend mindestens ein Isoliermaterial (2) und mindestens eine mit dem Isoliermaterial verbundene Funktionsschicht in Form eines Abstandsgeleges (1), wobei das Abstandsgelege (1) eine luft- und flüssigkeitsdurchlässige Schicht des Verbundwerkstoffs (10) ausbildet, wobei das Isoliermaterial (2) ein Weichschaumstoff auf Melaminharzbasis ist und das Abstandsgelege (1) fest mit dem Isoliermaterial (2) verbunden ist.

## Beschreibung

Die vorliegende Erfindung betrifft einen Verbundwerkstoff zur Realisierung einer thermischen und/oder akustischen Isolierung in Fahrzeugen, Bauten, Anlagen oder ähnlichen Anwendungsbereichen. Zur Schallisolierung und zur gleichzeitigen thermischen Isolierung werden in beispielsweise Schienenfahrzeugen derartige Verbundwerkstoffe eingesetzt, die als ein plattenförmiges Produkt oder als Rollenware für die jeweiligen Anwendungszwecke zugeschnitten und entsprechend eingesetzt werden können.

Ein Problem bei derartigen Isolierungen ist, dass unterschiedliche, teils gegensätzliche technische Anforderungen gleichzeitig erfüllt werden müssen: So muss für eine gute thermische Isolierung der Verbundwerkstoff einen möglichst geringen Wärmeleitwert haben. Zudem muss eine gewisse mechanische Stabilität des Materials gegeben sein. Außerdem muss der Verbundwerkstoff für die Zwecke der Schallabsorption angepasst sein, d. h. eine möglichst gute akustische Isolierung ermöglichen. Nicht zuletzt ist in vielen derartigen Anwendungen, beispielsweise im Bereich von Schienenfahrzeugen oder Flugzeugen, außerdem noch eine hohe Hitzebeständigkeit bzw. Temperaturbeständigkeit in einem weiten Temperaturbereich erforderlich. Die derartigen Verbundwerkstoffe müssen auch den strengen Erfordernissen der Brandgefährdung in solchen Anwendungsbereichen genügen.

In bestimmten Bereichen sind thermisch und akustisch hochwirksame Isoliermaterialien zur Erfüllung dieser Anforderungen eingesetzt worden. In manchen Anwendungsbereichen besteht jedoch die Gefahr, dass diese Eigenschaften stark beeinträchtigt werden aufgrund von Feuchtigkeit, Nässe oder anderen äußeren Einflüssen, die in bestimmten Umgebungen vorhanden sind.

Vor diesem Hintergrund ist es die Aufgabe der vorliegenden Erfindung, einen Verbundwerkstoff für eine Realisierung von thermischen oder akustischen Isolierungen in Fahrzeugen, Bauten oder ähnlichem bereitzustellen, welcher eine hohe Beständigkeit der thermischen und akustischen Isolationseigenschaften auch bei äußeren Umgebungseinflüssen wie Feuchtigkeit, Nässe oder Öl langfristig gewährleistet.

Diese Aufgabe wird mit einem Verbundwerkstoff gemäß den Merkmalen des Anspruchs 1 gelöst. Vorteilhafte Ausgestaltungen und Weiterbildungen der Erfindung sind Gegenstand der abhängigen Ansprüche.

Erfindungsgemäß und wie es in Anspruch 1 definiert ist, wird ein Verbundwerkstoff zur Realisierung einer thermischen und/oder akustischen Isolierung in Fahrzeugen, Bauten, Anlagen oder dergleichen mit einer insgesamt flächigen plattenartigen Grundform bereitgestellt, welcher mindestens ein Isoliermaterial und mindestens eine mit dem Isoliermaterial verbundene Funktionsschicht in Form eines Abstandsgeleges umfasst, wobei das Abstandsgelege eine luft- und flüssigkeitsdurchlässige Schicht des Verbundwerkstoffs ausbildet, wobei der Verbundwerkstoff dadurch gekennzeichnet ist, dass das Isoliermaterial ein Weichschaumstoff auf Melaminharzbasis ist und dass das Abstandsgelege fest mit dem Isoliermaterial verbunden ist. Der als Isoliermaterial dienende Weichschaumstoff aus einem Melaminmaterial hat den Vorteil, dass der Verbundwerkstoff eine gute strukturelle Stabilität aufweist und sowohl für die Zwecke einer thermischen Isolierung als auch der Schallabsorption exzellente Eigenschaften aufweist. Das Material des Verbundwerkstoffs gemäß der Erfindung kann beispielsweise in einem Boden- oder Wandbereich eines Schienenfahrzeugs zur Isolierung eingesetzt werden. Der insgesamt flächige plattenartige Aufbau ermöglicht es, das Material entsprechend den jeweiligen Erfordernissen zuzuschneiden und den Gegebenheiten entsprechend einzubauen. Die feste Verbindung mit einem Abstandsgelege hat den Vorteil, dass die Isolierungseigenschaften nicht aufgrund von Feuchtigkeit oder anderen äußeren Einflüssen beeinträchtigt werden. Das Abstandsgelege, welches eine Funktionsschicht des Verbundwerkstoffs ist, verhindert einen unerwünschten Kontakt des Isoliermaterials mit Nässe und ist fest mit dem Isoliermaterial verbunden.

Der Verbundwerkstoff kann beispielsweise an einem Wand- oder Bodenbereich mit der Seite des Abstandsgeleges aufgelegt werden, so dass eine Kondensationsfeuchtigkeit oder andere Flüssigkeiten wie Öl an der durchlässigen Schicht des Abstandsgeleges abfließen können. Das Isoliermaterial selbst, welches ein Melaminweichschaumstoff ist, gelangt so nicht direkt mit der Feuchtigkeit oder der Flüssigkeit in Verbindung. Hierdurch wird verhindert, dass die Isolierwirkung des Verbundwerkstoffs durch auftretende Feuchtigkeit oder Nässe nachträglich reduziert wird. Der Verbundwerkstoff ist als ein fester Verbund zwischen dem Melaminschaumstoff und dem Abstandsgelege bereitgestellt, d. h. das Abstandsgelege ist Teil des Verbundwerkstoffs und kann so zusammen mit dem Isoliermaterial für die weitere Verarbeitung entsprechend direkt zugeschnitten und angepasst werden. Weitere Bearbeitungsschritte vor Ort sind nicht nötig. Das erfindungsgemäße Verbundmaterial aus einem Melaminschaumstoff und einem Abstandsgelege hat weiterhin den Vorteil, dass eine langfristige gute Schallabsorption und thermische Isolierung gegenüber Wärme/Kälte gewährleistet ist. Mit dem Abstandsgelege wird das Isoliermaterial quasi vor einer Durchnässung geschützt, und es wird vermieden, dass eine Staunässe aufgrund von Kondensationswasser oder ähnlichem an das Isoliermaterial herangelangt. Das Abstandsgelege selbst kann jedes auf dem Gebiet bekannte Abstandsgelege sein, solange es eine feuchtigkeits- und luftdurchlässige Schicht des Verbundwerkstoffs mit dem Melaminschaumstoff ausbildet. Beispielsweise kann ein Drahtgeflecht, ein Noppenmaterial, ein Kunststoffgebilde oder ein Geflecht von Kunststofffäden als ein Abstandsgelege eingesetzt werden. Der Weichschaumstoff auf Melaminharzbasis hat ferner den Vorteil, dass er eine hohe Temperaturbeständigkeit in einem weiten Bereich von sehr niedrigen bis zu sehr hohen Temperaturen aufweist. Eine hohe Temperaturbeständigkeit oder Hitzebeständigkeit bedeutet, dass der Verbundwerkstoff widerstandsfähig ist auch in höheren Temperaturbereichen, beispielsweise bis + 150° C, ohne wesentliche Zerstörung des Materials oder der Struktur des Materials. Es kann in solchen Bereichen zum Beispiel nicht schmelzen bzw. sich entzünden, so dass es weiter gebrauchsfertig bleibt. Damit kann auch eine gute Brandfestigkeit des Verbundwerkstoffs insgesamt entsprechend den Brandschutzverordnungen wie beispielsweise FMVSS, DIN 75 200, 45545-2 gewährleistet werden. Nicht zuletzt ist dieses Material eines erfindungsgemäßen Verbundwerkstoffs auch öl- und wasserabweisend und kann beispielsweise auch mit einer Imprägnation zur noch höheren Öl- und Wasserfestigkeit versehen werden.

Gemäß einer vorteilhaften Ausgestaltung der Erfindung ist das Abstandsgelege der Funktionsschicht ein aus Filamenten auf Kunststoffbasis hergestelltes Flächenmaterial, insbesondere ein Kunststoffgeflecht oder ein Kunststoffgewebe. Gemäß dieser vorteilhaften Ausgestaltung der Erfindung ist das Abstandsgelege somit eine Art Kunststoffgeflecht oder Kunststoffgebilde, welches direkt auf einer Seite des Isoliermaterials fest angebracht wird. Das Kunststoffgelege oder Kunststoffgeflecht kann beispielsweise aus einem Monofilament auf Kunststoffbasis realisiert sein, welches zu einem flächigen Gebilde einer vordefinierten Dicke von beispielsweise 5 mm bis 20 mm geformt ist. Damit hat das Abstandsgelege eine vordefinierte Dicke in dem Verbundwerkstoff, so dass eine gleichmäßige und durchgängige Drainageschicht in dem Verbundwerkstoff über die gesamte Fläche gegeben ist. Das Kunststoffgeflecht oder Kunststoffgewebe kann beispielsweise durch ein wellenförmig verformtes Kunststofffilament realisiert werden, so dass eine ausreichende Drainageschicht für ein effektives Abfließen von Kondensationswasser oder Vermeiden von Staunässe gewährleistet wird.

Gemäß einer vorteilhaften Ausgestaltung der Erfindung ist das Abstandsgelege des Verbundwerkstoffs, welches fest mit dem Isoliermaterial verbunden ist, ein flexibles Kunststoffgelege mit einer vordefinierten Dicke B im Verhältnis zu einer Dicke A des Isoliermaterials mit einem Verhältnis der Dicken B:A von minimal 1:10 bis maximal 1:3. Das heißt, das Kunststoffgebilde hat eine Dicke B von minimal einem Zehntel und maximal einem Drittel der Dicke des Isoliermaterials. Nach Untersuchungen der Erfinder hat sich herausgestellt, dass mit solch einem Dickenverhältnis eine optimale Kombination von Isoliereigenschaften (thermisch, akustisch) und der Vermeidung einer Durchnässung oder Benässung des Isoliermaterials in den gängigen Anwendungsbereichen erzielt werden kann. Das flexible Kunststoffgebilde ist so geformt, dass eine vordefinierte, im Wesentlichen gleichbleibende Dicke B über die gesamte Fläche des Verbundwerkstoffs gegeben ist und dass das Material des Verbundwerkstoffs dennoch insgesamt flexibel, d. h. biegsam, ist. Der Verbundwerkstoff lässt sich so sowohl in ebenen als auch in gekrümmten Anwendungssituationen vorteilhaft einsetzen.

Gemäß einer weiteren vorteilhaften Ausgestaltung der Erfindung ist das Abstandsgelege des Verbundwerkstoffs ein wirres Gebilde aus einem feuchtigkeitsbeständigen Material. Das Kunststoffgebilde des Abstandsgeleges kann so als eine Kunststoffdrahtstruktur realisiert werden, wobei der Draht in Form eines gewellten und verflochtenen oder verknüpften Gebildes hergestellt ist. Insbesondere besteht das Abstandsgelege aus mehreren miteinander verflochtenen Monofilamenten aus Kunststoff. Die feuchtigkeitsbeständigen Materialien sind dem Fachmann des Gebiets bekannt. Aufgrund der Feuchtigkeitsbeständigkeit ist ein langfristiger sicherer Halt des Materials gewährleistet. Eine negative Beeinflussung der Isoliereigenschaften des Isoliermaterials wird so effektiv vermieden. Der Verbundwerkstoff ist also widerstandsfähig und unanfällig gegenüber Nässe und Feuchtigkeit. Er wird hierdurch weder aufgelöst noch erheblich verändert in seinen Eigenschaften.

Gemäß einer weiteren vorteilhaften Ausgestaltung der Erfindung ist das Isoliermaterial des Verbundwerkstoffs ein Melaminschaum mit öl- und wasserabweisenden Eigenschaften sowie einer Temperaturbeständigkeit in einem Bereich zwischen -50° C und +150° C. Der Verbundwerkstoff ist so auf einen Einsatz auch in feuchten und schmutzbedingt kritischen Bereichen bestens angepasst. Das Isoliermaterial wird nicht in seiner Schallabsorptionseigenschaft und Wärme- bzw. Kälteisolierung beeinträchtigt. Außerdem ist das Isoliermaterial und damit der Verbundwerkstoff insgesamt sehr temperaturbeständig in einem großen Anwendungsbereich von sehr niedrigen Temperaturen bis hin zu sehr hohen Temperaturen. Das Material ist also in diesen Temperaturbereichen widerstandsfähig und unempfindlich gegenüber strukturellen Änderungen oder Änderungen der Materialeigenschaften.

Gemäß einer weiteren vorteilhaften Ausgestaltung der Erfindung ist das Abstandsgelege an punktuellen Verbindungsstellen mit dem Isoliermaterial fest verbunden. Die für die Weiterverarbeitung notwendige Verbindung der Funktionsschicht des Abstandsgeleges und des Isoliermaterials selbst ist so gewährleistet, ohne dass die beiden Elemente aufwendig an allen Kontaktstellen miteinander verknüpft werden müssen. Eine punktuelle Verbindungsstelle kann beispielsweise in Form einer Schmelzstelle einer Naht, einer Klammerung, einer Klebung oder ähnlichem realisiert sein. Eine vorteilhafte Form der punktuellen Verbindungsstellen ist die Realisierung mit einem geeigneten Klebstoff. Auch ist es möglich, das Isoliermaterial bei der Herstellung direkt mit dem Abstandsgelege zu verbinden, indem beispielsweise das noch nicht verfestigte Isoliermaterial des Weichschaumstoffs mit dem Abstandsgelege an einer Seite zusammengebracht wird und so punktuell mit diesem verbunden wird.

Gemäß einer vorteilhaften Ausgestaltung der Erfindung ist das Abstandsgelege an der Verbindungsstelle mit dem Isoliermaterial durch Verschmelzen oder durch Einbetten mit/in dem Melaminschaumstoff verbunden.

Gemäß einer weiteren vorteilhaften Ausgestaltung der Erfindung ist das Abstandsgelege an den Verbindungsstellen mit dem Isoliermaterial durch Verkleben oder Vernähen mit dem Melaminschaumstoff verbunden. Ein Verkleben oder Vernähen kann an festgelegten punktuellen Verbindungsstellen so erfolgen, dass insgesamt die beiden Elemente, nämlich das Abstandsgelege und das Isoliermaterial, ein zusammenhängendes, einheitliches Flächengebilde formen.

Gemäß einer weiteren vorteilhaften Ausgestaltung der Erfindung ist der Verbundwerkstoff an der dem Abstandsgelege abgewandten Seite mit einer zusätzlichen Isolierschicht, insbesondere einer Aluminiumfolie oder einer Dämmplatte, versehen. Weitere Schichten oder Elemente können so an dem Verbundwerkstoff direkt mit angebracht werden, so dass weitere technische Eigenschaften erzielt werden können. Durch das Vorsehen einer Aluminiumfolie kann beispielsweise auch eine hohe Diffusionsdichte erreicht werden, so dass der Verbundwerkstoff auch mit einer sogenannten Dampfsperre verwendet werden kann. Eine weitere Dämmplatte kann auch zu Zwecken einer Versteifung und Verstärkung der Isolierwirkung vorgesehen werden, so dass der flexible Melaminschaumstoff mit dem Abstandsgelege speziell gegenüber einem Verbiegen oder Durchbiegen verstärkt wird. Auch lassen sich so noch höhere Wärmedämmeigenschaften oder Kältedämmeigenschaften realisieren, indem ein weiteres Isolationsmaterial an der dem Abstandsgelege abgewandten Seite an dem Schaumstoffmaterial aufgebracht wird.

Weitere Merkmale, Vorteile und Aspekte der vorliegenden Erfindung werden in der nachfolgenden Beschreibung von Ausführungsbeispielen offenbart werden. Die Beschreibung der Ausführungsbeispiele erfolgt anhand der in den Zeichnungen dargestellten Ausführungsbeispiele, in welchen:
- Fig. 1: eine perspektivische Ansicht eines ersten Ausführungsbeispiels eines erfindungsgemäßen Verbundwerkstoffs ist; und
- Fig. 2: eine perspektivische, teilweise aufgeschnittene Ansicht eines zweiten Ausführungsbeispiels eines erfindungsgemäßen Verbundwerkstoffs ist.

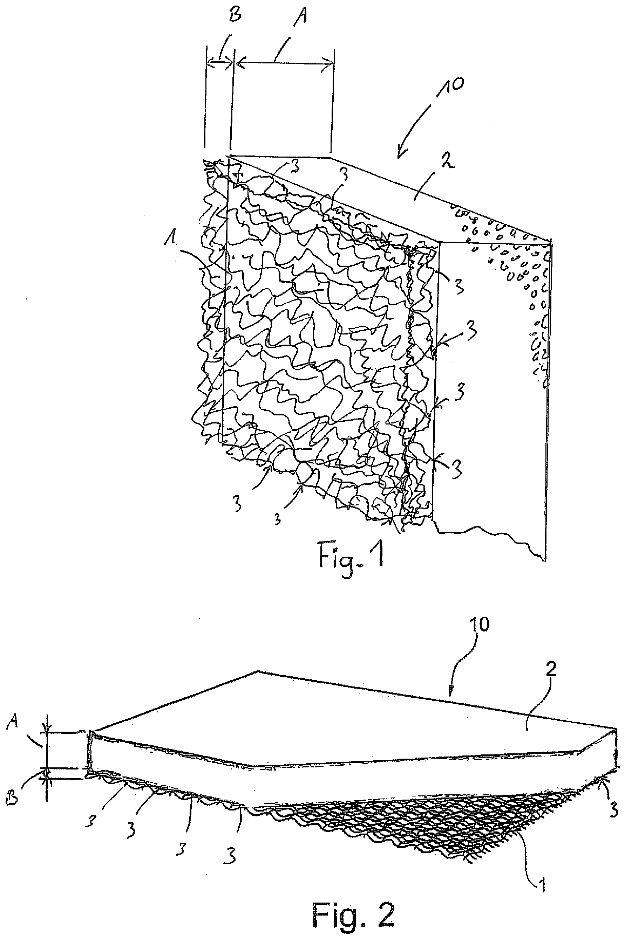

In der Fig. 1 der Zeichnungen ist in einer teilweisen perspektivischen Ansicht ein erstes Ausführungsbeispiel eines erfindungsgemäßen Verbundwerkstoffs 10 mit einem Isoliermaterial 2 in Form eines Melaminschaumstoffs gezeigt. Der Verbundwerkstoff 10 umfasst neben dem Isoliermaterial 2 mindestens eine demgegenüber dünnere zweite Lage eines Abstandsgeleges 1. Das Abstandsgelege 1 ist fest mit dem Isoliermaterial 2 verbunden. Fest verbunden bedeutet in diesem Zusammenhang, dass eine Verbindung in dem Sinne gegeben ist, dass nur durch Zerstörung von einem der Elemente oder von einem Verbindungsmaterial das Abstandsgelege 1 vom Isoliermaterial 2 getrennt werden kann. Während der Melaminschaumstoff des Isoliermaterials 2 die Eigenschaften einer guten thermischen Isolierung für Wärme- oder Kälteisolierungen sowie eine hohe Schallabsorption aufweist, dient das Abstandsgelege 1 dazu, das Isoliermaterial 2 vor eindringender Feuchtigkeit, Nässe oder sonstigen Flüssigkeiten wie Öl zu schützen. Das Abstandsgelege 1 ist so bemessen, dass sich eine genau definierte Drainagelage an mindestens einer Seite des Verbundwerkstoffs 10 ergibt, die eine ausreichende Dicke beispielsweise von etwa 5 mm bis 20 mm aufweist, damit etwaig auftretende Feuchtigkeit aufgrund von Kondenswasser oder ähnlichem nicht an das Material des Isoliermaterials 2 herangelangt. Auf diese Weise wird vermieden, dass der Weichschaumstoff auf Melaminharzbasis des Isoliermaterials 2 durch die Nässe, Feuchtigkeit oder ähnliches angegriffen wird und seine Isoliereigenschaften teilweise oder ganz verliert. Bei diesem ersten Ausführungsbeispiel der Fig. 1 ist der erfindungsgemäße Verbundwerkstoff 10 lediglich aus dem Isoliermaterial 2 und dem damit verbundenen Abstandsgelege 1 realisiert. Es können jedoch erfindungsgemäß weitere Schichten oder Lagen in dem Verbundwerkstoff vorgesehen sein. Beispielsweise kann auf der dem Abstandsgelege 1 abgewandten Rückseite des Isoliermaterials 2 eine weitere Schicht in Form einer Aluminiumfolie, einer Versteifungslage oder ähnlichem vorgesehen werden. Auch kann erfindungsgemäß ein Abstandsgelege 1 auf mehr als einer der Seiten des Isoliermaterials 2 vorhanden sein, beispielsweise auf beiden Frontseiten oder auf einer Frontseite und einer der Schmalseiten.

Mit der erfindungsgemäßen Kombination eines neuen Verbundwerkstoffs 10 bestehend aus einem Abstandsgelege 1 und dem Melaminschaumstoff 2 wird ein sehr effektiver Isolationswerkstoff bereitgestellt. Der Melaminschaumstoff ist nicht nur hinsichtlich der thermischen Isolierung exzellent, sondern weist auch die erforderlichen weiteren Eigenschaften einer Formstabilität und Schallabsorption auf. Durch das Abstandsgelege 1 an der einen Seite des Isoliermaterials 2 ist ein definierter Drainagebereich an dem Verbundwerkstoff 10 vorhanden. Der Melaminschaumstoff, welcher dazu neigt, Feuchtigkeit und Wasser aufzunehmen, wird so bei der Anlegung des Verbundwerkstoffs 10 mit der Seite des Abstandsgeleges 1 davor geschützt, dass er durchnässt wird. Damit kann Kondenswasser abfließen, und Feuchtigkeit wird daran gehindert, an das Isoliermaterial 2 selbst zu gelangen. Auf diese Weise wird effektiv vermieden, dass die Isolationswirkung des Weichschaumstoffs auf Melaminharzbasis verringert wird.

Das erfindungsgemäße Material kann als ein Verbundwerkstoff 10 zur Realisierung von verschiedenen Arten von Isolationszwecken in Fahrzeugen, Bauten, Anlagen oder ähnlichem eingesetzt werden: Beispielsweise lassen sich vorteilhafte Anwendungen in Bussen, Schienenfahrzeugen, Baufahrzeugen, Klimaanlagen oder ähnlichem nennen. In all diesen Bereichen sind große Flächen zu isolieren, nämlich beispielsweise die Böden und Wände oder Decken der Fahrzeugkabinen. Eine hohe Temperaturbeständigkeit in einem weiten Bereich ist bei solchen Einsatzzwecken erforderlich. Das erfindungsgemäße Isolationsmaterial in Form des Verbundwerkstoffs 10 mit Isoliermaterial 2 aus Weichschaumstoff auf Melaminharzbasis und einem damit verbundenen Abstandsgelege 1 hat ferner den Vorteil, dass es in einem weiten Temperaturbereich mit auch wechselnden Temperaturen ohne Verlust der Isoliereigenschaften einsetzbar ist. Das Material verliert auch bei starken Wechseln zwischen sehr niedrigen bis hin zu sehr hohen Temperaturen nicht seine hohen Isolationseigenschaften. Gleichbleibend gut in diesen sehr unterschiedlichen Temperaturbereichen ist auch die Schallabsorption durch das erfindungsgemäße Material. Der Melaminschaumstoff dämpft sehr wirksam sämtliche auftretende Geräusche und bietet eine sehr gute Schallabsorption auch im Fall von großflächigen Bereichen, beispielsweise in größeren Räumen von Schienenfahrzeugen wie Großraumwagen der Bahn.

Erfindungsgemäß wird ein Weichschaumstoff auf Melaminharzbasis des Isoliermaterials 2 zusammen mit einem Abstandsgelege 1 eingesetzt, welche die folgenden Eigenschaften aufweisen:

| | |
|---|---|
| Brandverhalten: | - FMVSS 302, DIN 75 200, erfüllt |
| | - ISO 3795, Brenngeschwindigkeit < 100 mm/min |
| | - EN 45545-2: Anforderung R1 + R7 + R17, HL 2 erfüllt (≥ 30 mm) |
| Temperaturbeständigkeit: | -50° C bis +150° C (Hitzebeständigkeit, sogenannte untere und obere Gebrauchstemperatur) |

Wärmeleitfähigkeit Melaminschaumstoff nach Norm EN 12667: ≤ 0,035 W/(mK) bei 10° C Raumgewicht Melaminschaumstoff des Isoliermaterials nach DIN EN ISO 845: 9 ± 1,5 kg/m³

Ferner ist der erfindungsgemäße Verbundwerkstoff 10 beständig gegenüber Leichtbenzin, Glycerin, Paraffinöl und ähnliche ölartige Flüssigkeiten, so dass auch eine gute chemische Beständigkeit der so realisierten Isolierung gegeben ist.

Gemäß einer vorteilhaften Ausgestaltung der Erfindung ist das Abstandsgelege 1 im Verhältnis zu dem Isoliermaterial 2 in einem festgelegten Dickenverhältnis vorgesehen, nämlich minimal 1:10 und maximal 1:3 der Dicken B:A des Isoliermaterials 2. So ist beispielsweise ein Abstandsgelege 1 in einer Dicke B zwischen 5 mm und 20 mm vorgesehen, während die entsprechende Dicke A des Isoliermaterials bzw. des Melaminschaumstoffs 2 im Bereich von 10 mm bis 125 mm oder gar 200 mm liegt.

In der Fig. 2 ist ein zweites Ausführungsbeispiel eines erfindungsgemäßen Verbundwerkstoffs 10 mit teilweise aufgeschnittener Isoliermaterialschicht 2 gezeigt. Das Abstandsgelege 1 ist hier anders als beim ersten Ausführungsbeispiel der Fig. 1 nicht ein wirres Kunststofffilamentgebilde, sondern ein geordnetes Geflecht aus gewellten Filamenten, welche miteinander verknüpft sind. Das Abstandsgelege 1 weist auch bei diesem Ausführungsbeispiel eine vordefinierte Dicke B auf, welche im Verhältnis zu der Dicke A des Isoliermaterials 2 ein Verhältnis von in etwa minimal 1:10 und maximal 1:3 hat. Auch hier wird als Isoliermaterial 2 ein Weichschaumstoff auf Melaminharzbasis eingesetzt, der mit dem Abstandsgelege 1 an vordefinierten Verbindungsstellen 3 fest verbunden ist. Die Verbindung des Abstandsgeleges 1 mit dem Isoliermaterial 2 erfolgt beispielsweise durch ein Verkleben oder ein Verschmelzen mit dem Isoliermaterial von dem Draht des Abstandsgeleges 2, durch ein Einbetten bei der Herstellung des Melaminschaumstoffs des Isoliermaterials 2 oder durch andere Verbindungsmittel, wie z. B. ein Heften, Vernähen oder Verkleben. Durch die punktuelle Verbindung an den Verbindungsstellen 3 des Abstandsgeleges 1 mit dem Isoliermaterial 2 wird ein flächiger, einstückiger Verbundwerkstoff bereitgestellt, der in Form von Platten oder als Rollenware ausgeliefert werden kann. An Ort und Stelle, je nach den Gegebenheiten, kann das Material zur Isolierung dann entsprechend einfach zugeschnitten und direkt ohne weitere Bearbeitungsschritte angebracht werden. Der Verbundwerkstoff 10 gemäß der Erfindung bietet somit zahlreiche vorteilhafte Einsatzmöglichkeiten und ist in der Verarbeitung einfach zu handhaben.

## Patentansprüche

1. Verbundwerkstoff (10) zur Realisierung einer thermischen und/oder akustischen Isolierung in Fahrzeugen, Bauten oder Anlagen mit einer insgesamt flächigen plattenartigen Grundform umfassend mindestens ein Isoliermaterial (2) und mindestens eine mit dem Isoliermaterial verbundene Funktionsschicht in Form eines Abstandsgeleges (1), wobei das Abstandsgelege (1) eine luft- und flüssigkeitsdurchlässige Schicht des Verbundwerkstoffs (10) ausbildet, **dadurch gekennzeichnet, dass** das Isoliermaterial (2) ein Weichschaumstoff auf Melaminharzbasis ist und dass das Abstandsgelege (1) fest mit dem Isoliermaterial (2) verbunden ist.

2. Verbundwerkstoff (10) nach Anspruch 1, **dadurch gekennzeichnet, dass** das Abstandsgelege (1) ein aus Filamenten auf Kunststoffbasis hergestelltes Flächenmaterial, insbesondere ein Kunststoffgeflecht oder Kunststoffgewebe, ist.

3. Verbundwerkstoff (10) nach Anspruch 1 oder 2, **dadurch gekennzeichnet, dass** das Abstandsgelege (1) ein flexibles Gebilde mit einer vordefinierten Dicke B im Verhältnis zur Dicke A des Isoliermaterials (2) mit einem Verhältnis von minimal 1:10 bis maximal 1:3 für die Dicken B:A ist.

4. Verbundwerkstoff (10) nach einem der vorangegangenen Ansprüche, **dadurch gekennzeichnet, dass** das Abstandsgelege (1) ein im Wesentlichen ungeordnetes, wirres Gebilde aus einem feuchtigkeitsbeständigen Material ist.

5. Verbundwerkstoff (10) nach einem der vorangegangenen Ansprüche, **dadurch gekennzeichnet, dass** das Isoliermaterial (2) ein Melaminschaumstoff mit öl- und wasserabweisender Eigenschaft sowie einer Temperaturbeständigkeit zwischen minus 50° C und +150° C ist.

6. Verbundwerkstoff (10) nach einem der vorangegangenen Ansprüche, **dadurch gekennzeichnet, dass** das Abstandsgelege (2) an punktuellen Verbindungsstellen (3) mit dem Isoliermaterial (2) fest verbunden ist.

7. Verbundwerkstoff (10) nach einem der vorangegangenen Ansprüche, **dadurch gekennzeichnet, dass** das Abstandsgelege (2) an den Verbindungsstellen (3) mit dem Isoliermaterial (2) durch Verschmelzen oder durch Einbetten mit/in dem Melaminschaumstoff verbunden ist.

8. Verbundwerkstoff (10) nach einem der Ansprüche 1 bis 6, **dadurch gekennzeichnet, dass** das Abstandsgelege (2) an den Verbindungsstellen (3) mit dem Isoliermaterial (2) durch punktuelles Verkleben mit dem Melaminschaumstoff verbunden ist.

9. Verbundwerkstoff (10) nach einem der vorangegangenen Ansprüche, **dadurch gekennzeichnet, dass** an der dem Abstandsgelege (2) abgewandten Seite eine zusätzliche Isolierschicht, insbesondere eine Aluminiumfolie oder eine Dämmplatte, vorgesehen ist.
